(19) Europäisches Patentamt
European Patent Office
Office européen des brevets

(11) **EP 3 523 007 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(21) Anmeldenummer: **17761895.6**

(22) Anmeldetag: **06.09.2017**

(51) Int Cl.:
**B01D 39/16** *(2006.01)* **B01D 39/20** *(2006.01)*
**B01D 39/02** *(2006.01)*

(86) Internationale Anmeldenummer:
**PCT/EP2017/072345**

(87) Internationale Veröffentlichungsnummer:
**WO 2018/065164 (12.04.2018 Gazette 2018/15)**

(54) **STAUBSAUGERFILTERBEUTEL MIT RECYCLIERTEN TEXTILMATERIALIEN UND/ODER BAUMWOLLLINTERS UND VERWENDUNG**

VACUUM CLEANER FILTER BAG CONTAINING RECYCLED TEXTILE MATERIALS AND/OR COTTON LINTERS AND USE

SAC D'ASPIRATEUR EN MATERIAUX TEXTILES RECYCLES ET/OU DE LINTERS DE COTON ET UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2016 EP 16192650**

(43) Veröffentlichungstag der Anmeldung:
**14.08.2019 Patentblatt 2019/33**

(73) Patentinhaber: **Eurofilters N.V.
3900 Overpelt (BE)**

(72) Erfinder:
• **SAUER, Ralf
3900 Overpelt (BE)**
• **SCHULTINK, Jan
3900 Overpelt (BE)**

(74) Vertreter: **Pfenning, Meinig & Partner mbB
Patent- und Rechtsanwälte
Theresienhöhe 11a
80339 München (DE)**

(56) Entgegenhaltungen:
EP-A2- 0 960 645          WO-A1-2011/057641
US-A1- 2009 223 190     US-A1- 2011 030 557

EP 3 523 007 B1

**Beschreibung**

Die vorliegende Erfindung betrifft Staubsaugerfilterbeutel aus Abfallprodukten der Textilindustrie. Zudem werden Verwendungsmöglichkeiten von Abfallprodukten der Textilindustrie für Staubsaugerfilterbeutel angegeben.

Filterbeutel aus Vliesstoffen haben Papierfilterbeutel in den letzten 10 Jahren wegen der erheblich besseren Gebrauchseigenschaften praktisch vollständig verdrängt. Insbesondere die Abscheideleistung, die Verstopfungsneigung und die mechanische Festigkeit wurden kontinuierlich verbessert. Die hierfür verwendeten Vliesstoffe sind dabei in der Regel aus thermoplastischen Kunststoffen, insbesondere Polypropylen (PP) und/oder Polyester (PET) gebildet.

Auch wenn noch weiter Bedarf an Verbesserung dieser Eigenschaften besteht, ist trotzdem schon zu spüren, dass die hohen Kosten für die aufwendigen Filterkonstruktionen immer weniger Akzeptanz beim Endkunden finden. Außerdem wird die Verwendung hochwertiger und schwerer Vliesstoffe für ein Wegwerfprodukt aus ökologischen Gründen immer kritischer gesehen.

Biologisch abbaubare Filterbeutel wie sie in der EP 2 301 404 und der WO 2011/047764 vorgeschlagen werden, scheinen auch kein erfolgversprechender Ansatz zur Verbesserung der ökologischen Eigenschaften zu sein, da Filterbeutel oft über die Müllverbrennung entsorgt werden und eine Kompostierung alleine schon wegen des vornehmlich nicht biologisch abbaubaren Sauggutes nicht in Frage kommt.

Vliesstoff-Filterbeutel für Staubsauger bestehen heute immer aus mehreren Lagen (EP 1 198 280, EP 2 433 695, EP 1 254 693). Zum Einsatz kommen Stützlagen, um die notwendige mechanische Festigkeit zu erreichen, Grobfilterlagen, die eine hohe Speicherkapazität für Staub aufweisen, ohne dass sich der Luftwiderstand zu stark erhöht und Feinfilterlagen zur Filtration von Partikeln < 1 $\mu$m.

Zur Erhöhung der Staubspeicherfähigkeit werden seit einigen Jahren zusätzlich Diffusoren und Trennwände in Filterbeuteln eingesetzt, die die Strömungsverhältnisse im Filterbeutel optimieren sollen, um so die Standzeit zu erhöhen.

Zur Fertigung dieser unterschiedlichen Materialien kommen verschiedenste Technologien zum Einsatz. Als Feinfilterlage werden meist Meltblown Mikrofaservliesstoffe verwendet. Diese Meltblownvliesstoffe sind Extrusionsvliesstoffe, bestehen meist aus Polypropylen und weisen Filamentdurchmesser im Bereich von unter 1 $\mu$m bis zu wenigen $\mu$m auf. Um hohe Abscheideleistung zu erreichen, werden diese Materialien elektrostatisch aufgeladen (z. B. mittels Coronaentladung). Zur weiteren Verbesserung der Abscheideleistung wurde vorgeschlagen, im Elektrospinnverfahren hergestellte Nanofasern auf Vliesstoffträgermaterialien aufzubringen (DE 199 19 809).

Für die Kapazitätslage kommen sowohl kardierte Stapelfaservliesstoffe, Extrusionsvliesstoffe, aber auch Faservliese (EP 1 795 247) aus Stapelfasern oder Filamenten zum Einsatz. Als Materialien für Kapazitätslagen werden meist Polypropylen oder Polyester, aber auch Fluff Pulp (EP 0 960 645, EP 1 198 280) verwendet.

Der Einsatz recycelter Kunststoffe (z. B. recyceltes Polyethylenterephthalat (rPET)) für Gewebe wurde in der WO 2013/106392 vorgeschlagen.

Die Verwendung von rPET als Rohstoff für Meltblown-Vliesstoffe wurde bereits untersucht (Handbook of Nonwovens, Woodhead Publishing Ltd., Ed. by S.J. Russell, Kapitel 4.10.1).

Die CN101747596 beschreibt die Verwendung von recyclierten PET bzw. recyclierten PBT (rPET/rPBT) als Material für Microfilamente.

Die EP 0 960 645 A2 beschreibt Staubsaugerfilterbeutel, die mehrlagig aufgebaut sind und eine Kapazitätslage aufweisen. Die Kapazitätslage ist dabei aus Cellulosefasern gebildet, die entweder durch Auftrag eines Sprühklebers (z. B. Latex) oder mittels thermisch aktivierbarer Bikomponenten-Fasern zu einem Vliesstoff gebunden werden können. Nachteilig bei derartigen Filtermaterialien ist jedoch stets noch die nicht vollständig ausreichende Staubspeicherkapazität und Standzeit.

Aus der US 2009/223190 A1 sind Staubsaugerfilterbeutel aus Vliesstoffmaterialien bekannt, die aus einem verfestigten recyclten Material gebildet sind. Die Herstellung erfolgt dabei durch Tränken einer aus recyclten Materialien gebildeten Faservlieslage, Auspressen des überschüssigen Klebstoffes und Aushärten des Klebstoffes. Hierdurch erfolgt eine sowohl mechanische als auch adhäsive Verfestigung des Materials. Das gemäß diesem Herstellungsverfahren hergestellte Filtermaterial besitzt eine sehr geringe Voluminösität, allerdings eine hohe mechanische Festigkeit. Nachteilig an derartigen Verfahren ist die unzufriedenstellende Staubspeicherkapazität.

Ausgehend hiervon ist es somit Aufgabe der vorliegenden Erfindung, Staubsaugerfilterbeutel anzugeben, die den auf den Markt befindlichen Staubsaugerfilterbeuteln in den Punkten Staubabscheideleistung und Standzeit in Nichts nachstehen und somit hervorragende Gebrauchseigenschaften aufweisen, jedoch vorwiegend aus wiederverwerteten Materialien oder aus Abfallmaterialien bestehen. Insbesondere ist es daher Aufgabe der vorliegenden Erfindung, ökologisch wie auch ökonomisch besonders vorteilhafte Staubsaugerfilterbeutel zu realisieren. Es soll vorzugsweise ein Anteil an wiederverwerteten Materialien im Filterbeutel von mindestens 40% realisiert werden.

Diese Aufgabe wird gelöst mit einem Staubsaugerfilterbeutel gemäß Patentanspruch 1. Die abhängigen Patentansprüche stellen dabei vorteilhafte Weiterbildungen dar. Mit Patentanspruch 15 werden Verwendungsmöglichkeiten von Vliesstoffen, die faser- und/oder staubförmiges recyceltes textiles Material und/oder Baumwolllinters umfassen,

2

für die den Innenraum umschließende Wandung eines Staubsaugerfilterbeutels genannt.

Die vorliegende Erfindung betrifft somit einen Staubsaugerfilterbeutel, der eine einen Innenraum umschließende Wandung aus einem luftdurchlässigen Material umfasst. In das luftdurchlässige Material ist eine Einlassöffnung eingebracht. Der erfindungsgemäße Staubsaugerfilterbeutel zeichnet sich dadurch aus, dass das luftdurchlässige Material mindestens eine Lage eines Vliesstoffes umfasst, der faser- und/oder staubförmiges recycliertes textiles Material und/oder Baumwolllinters umfasst.

Das faser- und/oder staubförmige recyclierte textile Material kann beispielsweise aus Textilabfall gewonnen werden. Textilabfälle beinhalten als Oberbegriff die Gruppen Produktionsabfälle (pre-consumer-Abfälle) und gebrauchte Textilien (post-consumer-Abfälle). Als alternative oder zusätzliche Quelle für das faser- und/oder staubförmige recyclierte textile Material eignen sich faser- und/oder staubförmige Rohstoffe, die bei der Herstellung und/oder Verarbeitung von Textilien anfallen; diese Rohstoffe sind ebenso zu den pre-consumer-Abfällen zu zählen. Weiterhin können Baumwolllinters als faser- und/oder staubförmige recycliertes textiles Material eingesetzt werden. Die unterschiedlichen Kategorien der Rohstoffe für das faser- und/oder staubförmige recyclierte textile Material für die Zwecke der vorliegenden Erfindung wird nachfolgend näher erläutert.

### Fasern aus textilen Produktionsabfällen und/oder gebrauchten Textilien

Textile Produktionsabfälle sind unvermeidbare Abfälle, die entlang der gesamten technologischen Kette der Herstellung von Textilien entstehen. Diese textilen Materialien stellen pre-consumer-Abfälle dar. Sie besitzen in der Regel ein kontinuierliches Aufkommen mit konstanter und bekannter Zusammensetzung und sind meist sortenrein erfassbar. Insbesondere zählen Schnittabfälle oder Randstreifen zu derartigen Produktionsabfällen. Zu den gebrauchte Textilien (Alttextilien, Abfalltextilien) fallen überwiegend in privaten Haushalten (Altkleider mit Herkunft aus dem In- und Ausland) und zunehmend im kommunalen Bereich und Dienstleistungsbereich sowie in der Industrie an (siehe "Vliesstoffe", 2. Auflage, Wiley-VCH, 2012, herausgegeben von H. Fuchs, W. Albrecht).

In den zuvor angesprochenen textilen Produktionsabfällen sowie gebrauchten Textilien (Alttextilien) liegen einzelne Fasern zum Textil gebunden vor. Zur Erzeugung des faser- und/oder staubförmigen recyclierten textilen Materials werden beispielsweise die Produktionsabfällen bzw. gebrauchten Textilien mit geeigneten Verfahren geöffnet oder aufgeschlossen, um die Textilien bildenden Fasern zu vereinzeln. Insbesondere eignet sich hierfür das sogenannte "Reißverfahren", das z.B. in "Vliesstoffe", 2. Auflage, Wiley-VCH, 2012, herausgegeben von H. Fuchs, W. Albrecht in Kapitel 1.3 vorgestellt ist. Hierbei entstehen sog. "Reißfasern", die insbesondere für die Zwecke der Herstellung der Vliesstofflage des Staubsaugerfilterbeutels der vorliegenden Erfindung eingesetzt werden können. Die beim Reißverfahren erzeugten Reißfasern können ggf. mittels Hammermühlen weiter aufgeschlossen und verkleinert werden. Auch ggf. beim Reißverfahren anfallende staubförmige Bestandteile der aufgeschlossenen Textilien, die als Bestandteil der Fasern aus textilen Produktionsabfällen und/oder gebrauchten Textilien anfallen, können mit in die Vliesstofflage des Staubsaugerfilterbeutels mit eingearbeitet werden. Alternativ kann auf die staubförmigen Bestandteile auch verzichtet werden, indem sie beispielsweise mittels eines Siebverfahrens abgetrennt werden.

Bei den textilen Produktionsabfällen bzw. gebrauchten Textilien bzw. Abfalltextilien kann es sich um alle anderen Arten von Textilimaterialien, wie z.B. Textilien aus Naturfasern (z.B. Hanf, Jute, Flachs, Ramie, Kokos, Lein, Sisal, Wolle, Kaschmir, Seide) oder Chemiefasern (z.B. Polyester, Polyamid, Viscose) sowie Mischungen aus den zuvor genannten Textilien handeln.

Besonders bevorzugt werden für die Zwecke der vorliegenden Erfindung Reißfasern, insbesondere aus Baumwolltextilien erzeugte Reißfasern eingesetzt.

### Faser- und/oder staubförmige Rohstoffe aus Herstellung und/oder Verarbeitung von Textilien

Alternativ oder zusätzlich zu den zuvor angesprochenen textilen Materialien können zur Herstellung der Vliesstofflage auch faser- und/oder staubförmige Rohstoffe verwendet werden, die bei der Herstellung und/oder Verarbeitung von Textilien anfallen. Derartige faser- und/oder staubförmige recyclierte textile Materialien fallen unvermeidbarer bei der Herstellung und/oder der Verarbeitung von Textilien an, wie beispielsweise dem Spinnen, der Herstellung, dem Schneiden, dem Trocknen oder dem Recyceln von Textilmaterialien. Insbesondere eignen sich beispielsweise Spinnabfälle als geeigneter Rohstoff. Diese faser- und/oder staubförmigen Materialien stellen Abfallmaterialien an, die sich auf den zur Verarbeitung der Textilien verwendeten Maschinen oder Filtermaterialien absetzen können. Die Stäube bzw. Fasern werden normalerweise entsorgt und thermisch verwertet. Im Gegensatz den voranstehend beschriebenen Abfalltextilien liegen die Fasern bzw. Stäube in Rohstoffen, die aus der Herstellung und/oder Verarbeitung von textilen Materialien anfallen, bereits vereinzelt vor, so dass derartige Materialien nicht weiter (oder nur geringfügig) aufgeschlossen werden müssen und unmittelbar weiter verarbeitet werden können. Allerdings können auch diese Rohstoffe zur Beeinflussung der Faserdimensionierung weiteren Aufschlussverfahren, wie z.B. dem Behandeln mit einer Hammermühle unterzogen werden. Es kann sich bei diesen Rohstoffen um (sortenreine) Baumwollmaterialien handeln, denkbar sind jedoch ebenso alle anderen Arten von Materialien die bei der Textilproduktion Verwendung finden, wie z.B. Naturfasern (z.B. Hanf, Jute, Flachs, Ramie, Kokos, Lein, Sisal, Wolle, Kaschmir, Seide) oder Chemiefasern (z.B. Polyester, Polyamid, Viscose) sowie Mischungen aus den zuvor genannten Materialien.

**Baumwollinters**

Baumwolllinters sind kurze Baumwollfasern, die am Baumwollsamenkern anhaften, nachdem das lange Samenhaar (Baumwolle) vom Kern entfernt worden ist. Baumwolllinters sind in der Faserlänge (1 bis 6 mm) und im Reinheitsgrad stark verschieden, nicht spinnbar und stellen in der Textilindustrie normalerweise einen nicht verwertbaren Reststoff und somit ein Abfallprodukt dar. Auch Baumwolllinters können für die Vliesstoffe, die in luftdurchlässigen Materialien für die erfindungsgemäßen Staubsaugerfilterbeutel eingesetzt werden können, verwendet werden.
Denkbar sind ebenso Kombinationen zweier oder aller der zuvor erläuterten Rohstoffmaterialien für die Herstellung der Vliesstofflage nach der vorliegenden Erfindung.
Eine zusätzliche Beimischung besonders feiner und kurzer Stapelfasern (Mikrofasern) im geringen Umfang zu den zuvor angesprochenen Ausgangsmaterialien für den Vliesstoff, der in den Staubsaugerfilterbeuteln nach der vorliegenden Erfindung zum Einsatz kommt, kann ebenso vorteilhaft sein. Diese Mikrofasern können sowohl den Fasern aus textilen Produktionsabfälle/gebrauchten Textilien, den Faser- und/oder staubförmigen Rohstoffen aus der Herstellung und/oder Verarbeitung von Textilien und/oder den Baumwollinters beigemischt werden. Solche Fasern sind beispielsweise unter der Bezeichnung Cyphrex der Firma EASTMAN erhältlich. Die Sorte Cyphrex 10001 weist beispielsweise bei einer Länge von 1,5 mm einen Durchmesser von etwa 2,5 $\mu$m auf. Durch diese oder ähnliche Mikrodenier PET-Stapelfasern lässt sich die Porengröße weiter vorteilhaft beeinflussen.
In der Vliesstofflage, die im luftdurchlässigen Material enthalten ist, ist das faser- und/oder staubförmige recyclierte Material bzw. sind die Baumwolllinters gebunden. Das Vliesstoffmaterial hat insofern einen Bindeschritt durchlaufen. Die Bindung des staub- und/oder faserförmigen recyclierten Materials und/oder der Baumwolllinters erfolgt dabei bevorzugt darüber, dass der Vliesstofflage Bindefasern zugesetzt sind, die beispielsweise thermisch aktiviert werden können.
Kennzeichnendes Merkmal der Vliesstofflage, die im erfindungsgemäßen Staubsaugerfilterbeutel enthalten ist, ist das spezifische Volumen. Erfindungsgemäß beträgt das spezifische Volumen v der Lage des Vliesstoffs 20 bis 500 cm$^3$/g.
Das spezifische Volumen bedeutet hierbei das Verhältnis von Volumen zu Masse. Das spezifische Volumen wird gemäß der nachfolgend angegebenen Formel definiert:

$$\nu = 1/\delta = V/m$$

In der zuvor angegebenen Formel bedeutet V das Volumen der gemessenen Probe, m die Masse der Probe sowie $\delta$ das Raumgewicht einer gemessenen Probe eines Vliesstoffes. Das Raumgewicht stellt dabei die Dichte des Vliesstoffes, basierend auf dem Volumen einschließlich der Porenräume dar.
Die Bestimmung des Raumgewichts kann bei vorhandenen Lagen von Vliesstoffen dabei insbesondere durch Bestimmung flächenbezogenen Masse (DIN EN 29 073-1 : 1992-08) einer Probe der Vliesstofflage sowie der Dicke (bestimmt gemäß DIN EN ISO 9073-2: 1996, Prüfeinrichtung gemäß Kapitel 5.1: normale Vliesstoffe) bestimmt werden. Die Bestimmung der flächenbezogenen Masse für die Zwecke der vorliegenden Erfindung erfolgt stets nach Kapitel 5.1 der zitierten Norm, unabhängig von der absoluten Dicke der Vliesstofflage. Die flächenbezogene Masse wird in der Fachliteratur auch synonym mit "Grammatur" bezeichnet.
Die Rohdichte wird dabei wie folgt bestimmt:

$$\delta = G/d$$

Hierin bedeuten: G die flächenbezogene Masse der Lage des Vliesstoffes sowie d die Dicke, bestimmt gemäß DIN EN ISO 9073-2: 1996, Kapitel 5.1 - normale Vliesstoffe.
Überraschenderweise hat sich gezeigt, dass die erfindungsgemäßen Staubsaugerfilterbeutel eine bessere Staubspeicherfähigkeit aufweisen, verglichen mit Staubsaugerfilterbeuteln aus dem Stand der Technik, insbesondere den aus der EP 0 960 645 A2 bekannten Staubsaugerfilterbeuteln. Es konnte hierbei in nicht vorhersehbarer Weise gezeigt werden, dass ein Vliesstoff, der auf ökologisch besseren Materialien, nämlich Abfallmaterialien aus Abfalltextilien oder Abfallmaterialien aus der Textilherstellung beruht eine bessere Performance (Saugleistungskonstanz) bietet. Diese Verbesserung hängt mit dem noch größeren Porenvolumen zusammen. Beschreiben lässt sich diese Materialeigenschaft über das höhere spezifische Volumen bzw. das geringere Raumgewicht des neuen Materials.

Eine bevorzugte Ausführungsform sieht vor, dass das spezifische Volumen der mindestens einen Lage des Vliesstoffes 25 - 250 cm$^3$/g, bevorzugt 30 - 100 cm$^3$/g, insbesondere 40 - 60 cm$^3$/g beträgt.

Die Herstellung einer entsprechenden Vliesstofflage kann beispielsweise dadurch erfolgen, dass das faser- und/oder staubförmige recyclierte textile Material und/oder die Baumwolllinters zusammen mit den Bindefasern in einem aerodynamischen Verfahren (Airlaid- oder Airlay-Verfahren) abgelegt werden und anschließend eine Bindung zum fertigen Vliesstoff durch thermische Aktivierung der Bindefasern erfolgt.

Ein entsprechendes Herstellungsverfahren zur Herstellung von Vliesstoffen mittels eines Airlaid-Prozesses und Abbinden der Fasern ist in der EP 0 960 645 A2 beschrieben. Das dort für Fluff Pulp und Cellulosefasern beschriebene Herstellungsverfahren kann auch für die Zwecke der vorliegenden Erfindung zur Herstellung der Vliesstofflage verwendet werden.

In einer bevorzugten Ausführungsform ist vorgesehen, dass die mindestens eine faser- und/oder staubförmiges recycliertes textiles Material und/oder Baumwollinters umfassende Lage des Vliesstoffes bis zu 95 Gew.-%, bevorzugt 50 bis 90 Gew.-% des faser- und/oder staubförmigen recyclierten textile Materials und/oder Baumwollinters und mindestens 5 Gew.-%, bevorzugt 10 bis 50 Gew.-% an Bindefasern, insbesondere Bikomponentenfasern umfasst oder hieraus besteht.

Die Bindefasern können dabei z.B. sogenannte "Fusing Fibers" darstellen, die aus thermoplastischen, schmelzbaren Materialien gebildet sind. Diese Fusing Fibers schmelzen bei der thermischen Aktivierung auf und binden den staubund/oder faserförmige recyclierte Material bzw. die Baumwolllinters.

Weiter vorteilhaft ist hierbei, dass die bevorzugt als Bindefasern eingesetzten Bikomponentenfasern aus einem Kern, bestehend aus einem ersten thermoplastischen Material und einem Mantel, bestehend aus einem verglichen mit dem ersten thermoplastischen Material bei geringeren Temperaturen schmelzenden zweiten thermoplastischen Material, bestehen, wobei bevorzugt der Kern oder sowohl Kern als auch Mantel aus einem recyclierten Kunststoff oder mehreren recyclierten Kunststoffen besteht. Neben Kern/Mantel Bikomponentenfasern kommen auch die anderen gebräuchlichen Varianten von Bikomponentenfasern (z. B. Side by Side) in Frage.

Die bevorzugt als Bindefasern eingesetzten Fusing Fibers oder Bikomponentenfasern können dabei teilweise oder vollständig aus recyclierten Kunststoffen bestehen.

In einer bevorzugten Ausführungsform sind die Bindefasern Stapelfasern, insbesondere mit einer Länge von 1 bis 75 mm, bevorzugt 2 bis 25 mm.

Für die Zwecke der vorliegenden Erfindung kann beispielsweise ein Vliesstoff verwendet werden, wie er in der WO 2011/057641 A1 beschrieben ist.

In einer weiter bevorzugten Ausführungsform ist das luftdurchlässige Material mehrlagig aufgebaut, wobei das luftdurchlässige Material zusätzlich zur mindestens einen Lage des Vliesstoffes, der faser- und/oder staubförmiges recycliertes textiles Material und/oder Baumwolllinters umfasst, mindestens eine weitere Lage aufweist, die einen Vliesstoff und/oder ein Faservlies umfasst oder hieraus gebildet, wobei insbesondere mindestens eine, mehrere oder sämtliche der zusätzlichen Lagen einem oder mehrere recyclierte Kunststoffe umfassen oder hieraus gebildet sind.

Der für die Zwecke der vorliegenden Erfindung verwendete Begriff "recyclierter Kunststoff" ist dabei synonym zu verstehen zu Kunststoff-Recyclaten. Zur begrifflichen Definition wird hierbei auf die Norm DIN EN 15347:2007 verwiesen.

Mindestens eine dieser zusätzlichen Lagen ist somit bevorzugt ein Vliesstoff bzw. ein Faservlies, das recyclierte Kunststoffe umfasst und insbesondere aus recyclierten Kunststoffen gebildet ist. Im Unterschied zum aus dem Stand der Technik bekannten Staubsaugerfilterbeuteln wird somit weniger oder gar kein frisches (virgin) Kunststoffmaterial zur Herstellung der der Wandung des Staubsaugerfilterbeutels zugrundeliegenden Vliesstoffen bzw. Faservliesen verwendet, sondern es gelangen überwiegend oder ausschließlich Kunststoffe zum Einsatz, die bereits in Verwendung waren und durch entsprechende Recycling-Verfahren wiedergewonnen wurden. Derartige Filterbeutel sind in ökologischer Hinsicht deutlich vorteilhaft, da sie in hohem Maße rohstoffneutral hergestellt werden können. Diese Filterbeutel bieten ebenso ökonomische Vorteile, da die meisten recyclierten Kunststoffmaterialien deutlich günstiger bezogen werden können, als die entsprechenden Rohstoffe, die nicht recycliert sind ("virgin" Kunststoffe).

Im Sinne der vorliegenden Erfindung bezeichnet ein Vliesstoff dabei ein Wirrgelege, das einen Verfestigungsschritt durchlaufen hat, so dass es eine ausreichende Festigkeit aufweist, um zum Beispiel zu Rollen auf- bzw. abgewickelt zu werden. Ein Faservlies entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel zu Rollen auf- bzw. abgewickelt zu werden. Bezüglich der Definition dieser Terminologie wird auf die EP 1 795 427 A1 verwiesen.

Gemäß einer bevorzugten Ausführungsform sind die Fasern der mindestens einen zusätzlichen Lage des Vliesstoffs bzw. des Faservlieses, das im luftdurchlässigen Material der Wandung des erfindungsgemäßen Staubsaugerfilterbeutels beinhaltet ist, aus einem einzigen recyclierten Kunststoffmaterial gebildet.

Alternativ ist es jedoch ebenso bevorzugt, wenn die Fasern der mindestens einen zusätzlichen Lage des Vliesstoffes bzw. des Faservlieses aus unterschiedlichen Materialien gebildet sind, von denen zumindest eines einen recyclierten Kunststoff darstellt. Hierbei sind insbesondere zwei Ausführungsformen denkbar:

Einerseits kann es sich um ein Gemisch mindestens zweier Fasertypen handeln, beispielsweise um Fasergemische, die aus zumindest zwei unterschiedlichen recyclierten Kunststoffen gebildet sind.

Andererseits ist es ebenso möglich, dass die mindestens eine zusätzliche Lage des Faservlieses bzw. des Vliesstoffes Bikomponentenfasern (BiKo-Fasern) beinhaltet oder hieraus gebildet ist, die aus einem Kern, sowie einem den Kern umhüllenden Mantel bestehen. Kern und Mantel sind dabei aus unterschiedlichen Materialien gebildet. Die Bikomponentenfasern können als Stapelfasern vorliegen oder als Extrusionsvliesstoff (beispielsweise aus Meltblownvliesstoff) ausgebildet sein, so dass die Bikomponentenfasern theoretisch unendliche Länge aufweisen und sogenannte Filamente darstellen. Bei derartigen Bikomponentenfasern ist es von Vorteil, wenn zumindest der Kern aus einem recyclierten Kunststoff gebildet ist, für den Mantel kann beispielsweise auch ein Virgin-Kunststoff, aber alternativ ebenso ein anderer recyclierter Kunststoff eingesetzt werden.

Für die Vliesstoffe bzw. Faservliese der mindestens einen zusätzlichen Lage ist es für die Zwecke der vorliegenden Erfindung möglich, dass es sich hierbei um trockengelegte, nassgelegte oder Extrusionsvliesstoffe handelt. Demzufolge können die Fasern der Vliesstoffe bzw. Faservliese endliche Länge aufweisen (Stapelfasern), aber auch theoretisch unendliche Länge aufweisen (Filamente).

Insgesamt kann der Aufbau der Wandung des Filterbeutels gemäß der vorliegenden Erfindung ebenso ausgestaltet sein, wie in der EP 1 795 247 beschrieben. Eine derartige Wandung umfasst somit mindestens drei Lagen, wobei mindestens zwei Lagen aus mindestens einer Vliesstofflage und mindestens einer Faservlieslage, enthaltend Stapelfasern und/oder Filamente bestehen. Die Wandung des Staubsaugerfilterbeutels zeichnet sich demnach zusätzlich durch eine Schweißverbindung aus, bei der sämtliche Lagen des Filtermaterials durch Schweißverbindungen miteinander verbunden sind. Der Pressflächenanteil des Schweißmusters beträgt dabei maximal 5 % der Oberfläche der durchströmbaren Fläche des Filtermaterials bzw. Staubsaugerfilterbeutels. Bezogen auf die gesamte durchströmbare Fläche des Filterbeutels liegen durchschnittlich maximal 19 Schweißverbindungen pro 10 cm$^2$ vor. Mindestens eine der Vliesstofflagen ist dabei gemäß der oben angesprochenen Vliesstofflage, die faser- und/oder staubförmiges recycliertes textiles Material und/oder Baumwolllinters umfasst, ausgebildet.

Beispielsweise kann das luftdurchlässige Material in einer Weise ausgestaltet sein, wie es im einleitenden Teil der vorliegenden Patentanmeldung beschrieben ist, also z.B. wie in EP 1 198 280, EP 2 433 695, EP 1 254 693, DE 199 19 809, EP 1 795 247, WO 2013/106 392 oder CN 101747596 beschrieben, solange staub- und/oder faserförmiges recycliertes Material aus der Herstellung von Textilien und/oder Baumwolllinters für die Herstellung dieser Filtermaterialien verwendet wurde. Bezüglich des detaillierten Aufbaus dieser Filtermaterialien wird auf den Offenbarungsgehalt dieser Druckschriften verwiesen.

Die vorliegende Erfindung erfasst mehrere besonders bevorzugte Möglichkeiten der mehrlagigen Ausgestaltung des luftdurchlässigen Materials, die nachfolgend vorgestellt werden. Die Mehrzahl dieser Lagen kann mittels Schweißverbindungen, insbesondere wie in der EP 1 795 427 A1 beschrieben, miteinander verbunden sein. Die Lagen können untereinander auch verklebt oder wie in WO 01/003802 beschrieben gebondet sein.

Beim zuvor genannten mehrlagigen Aufbau des luftdurchlässigen Materials sind insbesondere die folgenden Ausführungsformen vorteilhaft.

Gemäß einer ersten bevorzugten Ausführungsform weist das luftdurchlässige Material mindestens eine Stützlage und mindestens eine Kapazitätslage auf, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehreren recyclierte Kunststoffe umfassen oder hieraus gebildet sind, darstellen.

Alternativ hierzu ist es ebenso möglich, dass das luftdurchlässige Material mindestens eine Stützlage, mindestens eine Feinfilterlage und mindestens eine Kapazitätslage aufweist, wobei mindestens eine oder sämtliche der Stützlagen und/oder mindestens eine oder sämtliche der Feinfilterlagen Vliesstoffe, die einen recyclierten Kunststoff oder mehrere recyclierte Kunststoffe umfassen oder hieraus gebildet sind und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen.

Bei den beiden zuvor genannten Ausführungsführungsformen ist dabei vorgesehen, dass mindestens eine, bevorzugt sämtliche der Kapazitätslagen den voranstehend näher charakterisierten Vliesstoff, der faser- und/oder staubförmiges recycliertes textiles Material und/oder Baumwolllinters umfasst, umfassen oder hieraus gebildet sind. Durch die erfolgte Vliesbindung weist die als Kapazitätslage ausgebildete Vliesstofflage dabei eine derart hohe mechanische Festigkeit auf, dass sie auch als Stützlage fungieren kann.

Ebenso ist es möglich die Außenlage auf der Reinluftseite aus einem relativ dünnen Material auf Basis Baumwollstaub zu machen.

Die einzelnen Lagen sind dabei entsprechend ihrer Funktion näher bezeichnet.

Eine Stützlage im Sinne der vorliegenden Erfindung ist dabei eine Lage, die dem mehrlagigen Verbund des Filtermaterials die notwendige mechanische Festigkeit verleiht. Hierunter wird ein offener, poröser Vliesstoff bzw. ein Nonwoven mit leichtem Flächengewicht bezeichnet. Eine Stützlage dient in allererster Linie dazu, andere Lagen oder Schichten zu stützen und vor Abrasion zu schützen. Die Stützlage kann auch die größten Partikel filtern. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Kapazitätslage bietet einen hohen Widerstand gegenüber Stoßbelastung, Filtern von großen Schmutzpartikeln, Filtern eines signifikanten Anteils von kleinen Staubpartikeln, Speichern bzw. Zurückhalten von großen Mengen an Partikeln, wobei der Luft ein einfaches Durchströmen erlaubt wird und somit ein geringer Druckabfall bei hoher Partikelbeladung resultiert. Dies wirkt sich insbesondere auf die Standzeit eines Staubsaugerfilterbeutels aus.

Eine Feinfilterlage dient der Erhöhung der Filtrationsleistung des mehrlagigen Filtermaterials durch Einfangen von Partikeln, die beispielsweise durch die Stützlage und/oder die Kapazitätslage hindurch gelangen. Zur weiteren Erhöhung der Feinfilterlage kann diese bevorzugt elektrostatisch (z.B. durch Coronaentladung) aufgeladen werden, um insbesondere die Abscheidung von Feinstaubpartikeln zu erhöhen.

Einen Überblick über die einzelnen Funktionslagen innerhalb mehrlagiger Filtermaterialien für Staubsaugerfilterbeutel bietet die WO 01/003802. Das luftdurchlässige Material der Wandung des erfindungsgemäßen Staubsaugerfilterbeutels kann hinsichtlich seiner Konstruktion beispielsweise wie in diesem Patentdokument aufgebaut sein mit der Maßgabe, dass zumindest eine der Lagen des dort beschriebenen mehrlagigen Filtermaterials für den Staubsaugerfilterbeutel aus einem recyclierten bzw. mehreren recyclierten Kunststoffen gebildet ist.

Spezielle Ausführungsformen der zuvor genannten Aspekte der vorliegenden Erfindung sehen vor, dass jede Stützlage ein Spinnvlies oder Scrim ist, vorzugsweise mit einer flächenbezogenen Masse von 5 bis 80 $g/m^2$, weiter bevorzugt von 10 bis 50 $g/m^2$, weiter bevorzugt von 15 bis 30 $g/m^2$ und/oder vorzugsweise mit einem Titer der das Spinnvlies bzw. das Scrim bildenden Fasern im Bereich von 0,5 dtex bis 15 dtex.

Bevorzugt weist das luftdurchlässige Material ein bis drei Stützlagen auf.

Im Falle des Vorhandenseins mindestens zweier Stützlagen ist es bevorzugt, dass die Gesamtgrammatur der Summe aller Stützlagen 10 bis 240 $g/m^2$, bevorzugt 15 bis 150 $g/m^2$, weiter bevorzugt 20 bis 100 $g/m^2$, weiter bevorzugt 30 bis 90 $g/m^2$, insbesondere 40 bis 70 $g/m^2$ beträgt.

Alternativ oder zusätzlich zu den zuvor genannten Ausführungsformen ist es ebenso möglich, dass sämtliche Stützlagen aus einem recyclierten Kunststoff oder mehreren recyclierten Kunststoffen, insbesondere aus rPET gebildet sind.

Bei den zuvor genannten Feinfilterlagen ist es von Vorteil, wenn jede Feinfilterlage ein Extrusionsvliesstoff, insbesondere ein Meltblown-Vliesstoff ist, vorzugsweise mit einer flächenbezogenen Masse von 5 bis 100 $g/m^2$, bevorzugt 10 bis 50 $g/m^2$, insbesondere 10 bis 30 $g/m^2$.

Das luftdurchlässige Material für die Zwecke des erfindungsgemäßen Staubsaugerfilterbeutels kann dabei vorteilhaft ein bis fünf Feinfilterlagen umfassen.

Im Falle des Vorhandenseins mindestens zweier Feinfilterlagen kann die Gesamtgrammatur der Summe aller Feinfilterlagen 10 bis 300 $g/m^2$, bevorzugt 15 bis 150 $g/m^2$, insbesondere 20 bis 50 $g/m^2$ betragen.

Bevorzugt sind sämtliche Feinfilterlagen aus einem recyclierten Kunststoff oder mehreren recyclierten Kunststoffen, insbesondere rPET gebildet.

Besonders bevorzugte Feinfilterlagen sind hierbei Meltblown-Vliesstoffe, die insbesondere aus rPET gebildet werden können. Das eingesetzte rPET kann dabei nicht metallisiert oder metallisiert sein. Das rPET kann somit beispielsweise aus Getränkeflaschen (bottle flake chips) oder metallisierten PET-Folien stammen. Ebenso ist es möglich, dass die Melt-Blown-Vliesstoffe Bikomponenten-Meltblown-Vliesstoffe darstellen. Hierbei ist es insbesondere von Vorteil, wenn der Kern einer derartigen Bikomponentenfaser aus rPET besteht, dieses Kernmaterial wird von einem weiteren thermoplastischen Kunststoff, beispielsweise Polypropylen umhüllt.

Alternativ oder zusätzlich zu den zuvor genannten Ausführungsformen ist es ebenso möglich und insbesondere bevorzugt, wenn mindestens eine, bevorzugt sämtliche Feinfilterlagen elektrostatisch aufgeladen sind. Dies setzt voraus, dass zumindest die Oberfläche der aufzuladenden Fasern aus einem dielektrischen Material gebildet ist. Im Falle des Einsatzes von metallisiertem PET-Recyclat ist diese Ausführungsform dann lediglich im Rahmen der zuvor angesprochenen Bikomponentenfasern möglich, bei denen das metallisierte rPET den Kern der Fasern bildet. Die elektrostatische Auflladung kann dabei insbesondere Coronaentladung erfolgen.

Bei den zuvor genannten Kapazitätslagen ist es insbesondere von Vorteil, wenn mindestens eine, bevorzugt jede Kapazitätslage ein Vliesstoff ist, der faser- und/oder staubförmiges recycliertes textiles Material und/oder Baumwolllintes umfasst, wobei jede Kapazitätslage vorzugsweise flächenbezogene Masse von 5 bis 200 $g/m^2$, weiter bevorzugt von 10 bis 150 $g/m^2$, weiter bevorzugt von 20 bis 100 $g/m^2$, insbesondere 30 bis 50 $g/m^2$ aufweist.

Das luftdurchlässige Material weist bevorzugt ein bis fünf Kapazitätslagen auf.

Im Falle des Vorhandenseins mindestens zweier Kapazitätslagen kann die Gesamtgrammatur der Summe aller Kapazitätslagen 10 bis 300 $g/m^2$, bevorzugt 15 bis 200 $g/m^2$, weiter bevorzugt 20 bis 100 $g/m^2$, insbesondere 50 bis 90 $g/m^2$ betragen.

Eine besonders bevorzugte Ausführungsform sieht die folgenden mehrlagigen Varianten für das luftdurchlässige Material vor, mit einer vom Innenraum des Staubsaugerfilterbeutels ausgesehenen Lagenfolge:

Eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage. Für den Fall, dass die Kapazitätslage eine wie voran beschrieben hohe mechanische Festigkeit aufweist, kann dabei auch auf die innerste Stützlage verzichtet werden.

Eine oder zwei Kapazitätslagen, eine oder zwei Feinfilterlagen (Meltblownlagen), eine Stützlage (Spinnvlies).

Die Stützlagen und/oder Kapazitätslagen können dabei aus einem Vliesstoffmaterial gebildet sein, das staub- und/oder faserförmiges recycliertes Material aus der Herstellung von Textilien, insbesondere Baumwolltextilien und/oder Baumwolllinters umfasst.

In einer besonders bevorzugten Ausführungsform bildet dieses Vliesstoffmaterial die mindestens eine Kapazitätslage, während die anderen Lagen kein staub- und/oder faserförmiges recycliertes Material aus der Herstellung von Textilien, insbesondere Baumwolltextilien und/oder Baumwolllinters umfassen.

Es können sämtliche Lagen bei den zuvor genannten Ausführungsformen auch mittels Schweißverbindungen, insbesondere wie in EP 1 795 427 A1 beschrieben, miteinander verbunden sein. Schweißverbindungen sind allerdings nicht zwingend notwendig.

Weiter vorteilhaft ist, dass der Staubsaugerfilterbeutel eine eine die Einlassöffnung einfassende Halteplatte aufweist, die aus einem oder mehreren recycelten Kunststoffen gebildet ist oder einen oder mehrere recycelte Kunststoffe umfasst. Insbesondere ist die Halteplatte dabei aus rPET gebildet oder umfasst rPET zu einem sehr hohen Anteil, beispielsweise zu mindestens 90 Gew.%. Gemäß dieser bevorzugten Ausführungsform ist somit eine weitere Erhöhung des Anteils an recyclierten Kunststoffen im Staubsaugerfilterbeutel möglich.

Gemäß einer weiter bevorzugten Ausführungsform ist vorgesehen, dass im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen oder aus einem Vliesstoffes, der faser- und/oder staubförmiges recycliertes textiles Material und/oder Baumwolllinters umfasst, gebildet ist. Derartige Strömungsverteiler bzw. Diffusionen sind z.B. in den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden somit vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen.

Der recyclierte Kunststoff, der in speziellen Vliesstoffmaterialien oder in Halteplatten für die Staubsaugerfilterbeutel verwendet werden kann, ist dabei bevorzugt ausgewählt aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

Für viele Kunststoff-Recyclate bestehen einschlägige internationale Normen. Für PET-Kunststoff-Recyclate ist beispielsweise die DIN EN 15353:2007 einschlägig. PS-Recyclate werden in DIN EN 15342:2008 näher beschrieben. PE-Recyclate werden in DIN EN 15344:2008 behandelt. PP-Recyclate werden in DIN EN 15345:2008 charakterisiert. PVC-Recyclate sind in DIN EN 15346:2015 näher bezeichnet. Zum Zwecke der entsprechenden speziellen Kunststoffrecyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Bei dem recyclierten Kunststoff handelt es sich insbesondere um recycliertes Polyethylenterephthalat (rPET), das beispielsweise aus Getränkeflaschen, insbesondere aus sog. Bottleflakes, also Stücke gemahlener Getränkeflaschen, erhalten wurde.

Die recyclierten Kunststoffe, insbesondere das recyclierte PET, sowohl in der metallisierten, als auch in der nicht metallisierten Fassung, können zu den entsprechenden Fasern versponnen werden, aus denen die entsprechenden Stapelfasern bzw. Meltblown- oder Spunbonds-Vliesstoffe für die Zwecke der vorliegenden Erfindung hergestellt werden können.

Eine besonders bevorzugte Ausführungsform sieht vor, dass die Gewichtssumme der faser- und/oder staubförmigen recyclierten textilen Materialien und/oder Baumwolllinters und der ggfs. vorhandenen recyclierten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt.

Der Staubsaugerfilterbeutel gemäß der vorliegenden Erfindung kann beispielsweise in Form eines Flachbeutels, eines Seitenfaltenbeutels, eines Blockbodenbeutels oder eines 3D-Beutels, wie beispielsweise eines Staubsaugerfilterbeutels für einen Upright-Staubsauger ausgebildet sein. Ein Flachbeutel weist dabei keine Seitenwände auf und ist aus zwei Materiallagen gebildet, wobei die beiden Materiallagen entlang ihres Umfangs unmittelbar miteinander verbunden, beispielsweise verschweißt oder verklebt sind. Seitenfaltenbeutel stellen eine modifizierte Form eines Flachbeutels dar und umfassen festgelegte oder ausstülpbare Seitenfalten. Blockbodenbeutel umfassen einen sogenannten Block- oder Klotzboden, der zumeist die Schmalseite des Staubsaugerfilterbeutels bildet; an dieser Seite ist in der Regel eine Halteplatte angeordnet.

Besonders bevorzugte Ausführungsformen der erfindungsgemäßen Staubsaugerfilterbeutel werden nachfolgend beschrieben.

Bevorzugt können Filterbeutel konzipiert werden, die eine Lage aus einem nach einem aerodynamischen Verfahren (beispielsweise eines Airlay- oder Airlaid-Verfahrens) hergestellten Vliesstoff mit einem spezifischen Volumen von mindestens 20 cm$^3$/g aufweisen und aus faser- oder staubförmigen recyclierten textilen Materialien bestehen oder dieses aufweisen. Die Filterbeutel können jedoch auch mehrere Lagen dieses Airlay- oder Airlaid-Vliesstoffes umfassen. Zusätzlich können eine oder mehrere Vliesstofflagen vorhanden sein, die aus recyclierten Kunststoffen gebildet sind oder diese aufweisen. Die unterschiedlichen Vliesstoffe sind dabei nur für bestimmte Materiallagen geeignet. Um den Anteil an wiederverwerteten Rohstoffen noch weiter zu steigern, ist zusätzlich noch der Einsatz einer Halteplatte möglich, die aus rPET besteht oder zumindest rPET aufweist.

Zu den einzelnen bevorzugten Filterlagen:

Als Stützlagen kommen insbesondere Spinnvlieslagen aus rPET mit einem Flächengewicht von 5 bis 50 g/m$^2$ und einem Titer von 1 dtex bis 15 dtex in Frage. Als Rohstoff werden PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX® (Comerio Ercole) Verfahren vorteilhaft.

Als Feinfilterlagen werden eine oder mehrere Lagen Meltblown mit einem Flächengewicht von jeweils 5 bis 30 g/m$^2$ eingesetzt. Diese Feinfilterlagen können aus Polypropylen oder aus Polyestern, insbesondere rPET gebildet sein.. Zumindest diese Lage(n) werden durch eine Coronaentladung elektrostatisch aufgeladen. Für den Fall, dass die Feinfilterlagen aus rPET gebildet sind, können diese ebenfalls elektrostatisch geladen werden. Dabei ist lediglich zu beachten, dass dann keine metallisierten PET-Abfälle für die Fertigung verwendet werden. Zur Verbesserung der Ladungspersistenz können die eingesetzten Kunststoffe mit ladungsstabilisierenden Zusätzen versehen werden. Alternativ können die Meltblownfilamente auch aus Bicomponentenfasern bestehen, bei denen der Kern aus z.B. rPET und die Hülle aus einem Kunststoff, der sich besonders gut elektrostatisch aufladen lässt (z. B. PP, PC, PET), gebildet wird.

Bevorzugt sind im Staubsaugerfilterbeutel eine oder mehrere Kapazitätslagen enthalten, die ein Vliesstoffmaterial darstellen das aus Reißfasern oder Spinnabfällen und einer geeigneten Komponente zur Verfestigung des Vliesstoffes, z.B. Bicomponentenfasern hergestellt ist. Zur Herstellung von Kapazitätslagen sind unterschiedliche Verfahren geeignet. Gebräuchlich sind Kardierverfahren oder aerodynamische Verfahren, bei denen zunächst Stapelfasern abgelegt werden, die dann für gewöhnlich in einem Vliesbindeschritt (z. B. durch Vernadelung, Wasserstrahlverfestigung, Ultraschallkalandrierung oder auch mittels thermischer Verfestigung im Durchströmofen auch mittels Bikomponentenfasern oder Bindefasern) zu einem Vliesstoff verfestigt werden. Zur Kalandrierung ist insbesondere das HELIX® (Comerio Ercole) Verfahren vorteilhaft. Die Kapazitätslagen können ebenso Anteile von recyclierten Kunststoffmaterialien enthalten, z.B. rPET-Stapelfasern oder rPET-Filamente, die als Bindefasern, insbesondere Bikomonentenfasern zur Herstellung des Vliesstoffes eingesetzt werden können.

Ebenfalls kann ein Verfahren, bei dem das primär entstandene Faservlies nicht verfestigt wird, sondern mit möglichst wenigen Schweißpunkten an einen Vliesstoff gebunden wird, eingesetzt werden. Dieses Verfahren ist allerdings nicht für die Variante aus Baumwollstaub geeignet. Bei beiden Verfahren ist es möglich, Stapelfasern aus rPET zu verwenden. Kapazitätslagen können auch als Extrusionsvliesstoffe oder Extrusionsfaservliese gefertigt werden. Für diese Vliesstoffe ist ein Einsatz von rPET ebenfalls problemlos realisierbar.

Die Filamente oder Stapelfasern können auch aus Bikomponentenmaterialien bestehen, bei denen der Kern aus rPET und die Hülle aus einem Kunststoff, der sich besonders gut elektrostatisch aufladen lässt (z. B. PP, PC, PET) gebildet wird.

Alternativ oder ergänzend können auch eine oder mehrere Lagen eines Airlaid- oder Airlay-Vliesstoffes vorhanden sein, der aus Bikomponentenfasern und Baumwollstaub gebildet wird.

Das Flächengewicht (Grammatur) der einzelnen Kapazitätslagen liegt bevorzugt zwischen 5 und 200 g/m$^2$.

Die unterschiedlich hergestellten Kapazitätslagen können selbstverständlich auch miteinander kombiniert werden.

Beispielhafte und insbesondere Kapazitätslagen, die in den erfindungsgemäßen Staubsaugerfilterbeuteln eingesetzt werden können sind dabei in der nachfolgenden Tabelle gelistet:

|  | 1 | 2 | 3 | 4 | 5 | 6 |
|---|---|---|---|---|---|---|
| | Erfindungsgemäße Kapazitätslagen | | | | | |
| | Kapazitätslage aus Spinnabfällen gebunden mit 35 Gew.-% PET BiCo | Kapazitätslage aus Spinnabfällen gebunden mit 35 % Gew.-% PET BiCo | Kapazitätslage aus Spinnabfällen behandelt (Hammermühle, Sieb 3 mm) gebunden mit 35 Gew-% PET BiCo | Kapazitätslage aus Reißfasern gebunden mit 35 Gew.-%% PET BiCo | Kapazitätslage aus Reißfasern all behandelt (Hammermühle, Sieb 6 mm) gebunden mit 35 Gew-% PET BiCo | Kapazitätslage aus Reißfasern all behandelt (Hammermühle, Sieb 12 mm) gebunden mit 35 Gew-% PET BiCo |
| flächenbezoge-ne Masse [g/m²] | 93,4 | 103 | 82,4 | 103,7 | 90,8 | 74,9 |
| Dicke [mm] gemäß DIN EN ISO 9073-2:1996 Prüfein-richtung gemäß 5.1: Normale Vliesstoffe | 4,8 | 5,09 | 4,17 | 5,07 | 4,99 | 3,34 |
| Raumgewicht [g/cm³] | 0,019 | 0,020 | 0,020 | 0,020 | 0,018 | 0,022 |
| Spezifisches Volumen [cm³/g] | 51,4 | 49,5 | 50,6 | 48,9 | 55,0 | 44,6 |

Die Kapazitätslagen der Beispiele 1 bis 3 sind dabei aus gebundenen Spinnabfällen (Stapelfasern und Staub) gebildet. Die Spinnabfälle sind dabei mit Bikomponenten-Fasern aus PET gebunden, der Gewichtsanteil der Bikomponenten-PET-Fasern an der gesamten Kapazitätslage beträgt 35 Gew.-%. Die Kapazitätslagen gemäß der Beispiele 1 und 2 unterscheiden sich lediglich hinsichtlich ihrer Grammatur, die Kapazitätslage gemäß Beispiel 2 ist dabei geringfügig dicker ausgebildet als die Kapazitätslage gemäß Beispiel 1.

Die Kapazitätslage gemäß dem Beispiel 3 ist aus behandelten Spinnabfällen gebildet. Die Spinnabfälle werden hierbei mit einer Hammermühle zerkleinert und mit einem Sieb (Öffnungsweite 3 mm) gesiebt. Die gesiebte Fraktion an behandelten Spinnabfällen wird mit 35 Gew.-% Anteil Bikomponenten-PET-Fasern gebunden.

Den Kapazitätslagen der Beispielen 4 und 5 liegen Reißfasern zugrunde. Im Beispiel 4 werden geöffnete, aber ansonsten nicht weiter behandelte Textilabfälle eingesetzt, die Reißfasern gemäß Beispiel 5 sind ebenso einem Hammermühlenprozess unterzogen, hierbei werden die anfallenden Produkte mit einem Sieb (Öffnungsweite 6 mm) gesiebt.

Die Kapazitätslage gemäß dem Beispiel 6 ist in analoger Weise zur Kapazitätslage gemäß Beispiel 5 aus behandelten Reißfasern gebildet, die Maschenweite des Siebes beträgt allerdings 12 mm.

Um den Anteil an Recyclaten weiter zu erhöhen, ist die Verwendung einer Halteplatte aus rPET möglich. Wenn die Abdichtung zum Staubsaugerstutzen durch das Beuteilmaterial übernommen wird, kann die Halteplatte ausschließlich aus rPET bestehen. Für den Fall, dass die Halteplatte die Dichtfunktion übernehmen muss, kann eine TPE-Dichtung angespritzt oder angeklebt werden.

Bei Ausnutzung aller Möglichkeiten wird so ein Anteil an Recyclaten bzw. Abfallstoffen von bis zu 96 % möglich.

Die Erfindung betrifft zudem die Verwendung von Vliesstoffen, die faser- und/oder staubförmiges recyceltes textiles Material und/oder Baumwolllinters umfassen mit einem spezifischen Volumen von 20 bis 500 cm$^3$/g, für die den Innenraum umschließende Wandung eines Staubsaugerfilterbeutels. Hinsichtlich der speziellen Ausgestaltung derartiger Vliesstoffe wird auf die voranstehenden Ausführungsformen verwiesen.

Die vorliegende Erfindung wird anhand der nachfolgenden beispielhaften Ausführungen näher beleuchtet, ohne die Erfindung auf die speziellen dargestellten Ausführungen zu beschränken.

Anhand eines Vergleichs zwischen einem erfindungsgemäßen Staubsaugerfilterbeutel mit einer Kapazitätslage mit einem spezifischen Volumen v von mindestens 20 cm$^3$/g und einem Staubsaugerfilterbeutel aus einem aus dem Stand der Technik (EP 0 960 645 A2) bekannten Material konnte das überragende Staubspeichervermögen des erfindungsgemäßen Staubsaugerfilterbeutels belegt werden. Beide Staubsaugerfilterbeutel stellen dabei Flachbeutel von rechteckiger Geometrie dar, die eine Abmessung von 300 mm x 280 mm aufweisen. Der genaue Aufbau der verwendeten Filterbeutel sowie die Versuchsdurchführung werden nachfolgend beschrieben.

Der erfindungsgemäße Beutel hatte dabei den folgenden Aufbau. Das luftdurchlässige Material des Staubsaugerfilterbeutels hatte einen 4-lagigen Aufbau mit den folgenden Materiallagen (von außen nach innen gesehen): Die Außenlage bestand aus Spinnvlies (25 g/m$^2$), gefolgt von einer Feinfilterlage aus einem Meltblown von 28 g/m$^2$. Darauf folgte eine Verstärkungslage aus Spinnvlies von 17 g/m$^2$. Die darauffolgende Kapazitätslage stellte ein Vliesstoffmaterial dar, das das aus Reißfasern aus Textilabfall, die mit PET-Bikomponentenfasern gebunden waren, gebildet war. Der Anteil an Bikomponentenfasern an dieser Vliesstofflage betrug 35 Gew.-%, der Anteil an Reißfasern 65 Gew.-%. Die Kapazitätslage hatte ein Flächengewicht (Grammatur) von 74,9 g/m$^2$. Ihre Dicke nach DIN EN ISO 9073-2:1996, Abschnitt 5.1 betrug 3,34 mm. Das spezifische Volumen dieser Kapazitätslage betrug somit 44,6 cm$^3$/g. Diese Kapazitätslage entspricht Beispiel 6 der oben angegebenen Tabelle

Der Vergleichsbeutel gemäß dem Stand der Technik hatte folgenden Aufbau: Außenlage Spinnvlies 28 g/m$^2$, Feinfilterlage 22 g/m$^2$, Spinnvlies 17 g/m$^2$, Airlaid Vliesstoff 73 g/m$^2$ (Kapazitätslage), Spinnvlies 17 g/ m$^2$. Die Kapazitätslage wurde basierend auf der Lehre der EP 0 960 645 A2 (Absätze [0036] bis [0038]) hergestellt und stellt ein Vliesstoffmaterial aus 65 Gew.-% Zellulosefasern und 35 Gew.-% PET-Bikomponentenfasern dar. Sie hatte ein Flächengewicht von 73 g/m$^2$, eine Dicke nach DIN EN ISO 9073-2:1996, Abschnitt 5.1 von 0,9 mm. Das spezifische Volumen dieser Kapazitätslage betrug somit 12,3 cm$^3$/g.

Die Staubspeicherkapazität hängt in erster Näherung nur von der Kapazitätslage ab, die Anwesenheit einer weiteren Stützlage auf der Innenseite bei dem Vergleichsbeispiel kann für den Vergleich der Staubspeicherkapazitäten der erfindungsgemäßen Staubsaugerfilterbeutel und dem Staubsaugerfilterbeutel des Vergleichsbeispielsvernachlässigt werden.

Überraschenderweise konnte festgestellt werden, dass das Raumgewicht (flächenbezogene Masse / Dicke) der erfindungsgemäßen Kapazitätslagen in allen Beispielen (siehe Tabelle) deutlich geringer ausfällt als bei den aus dem Stand der Technik (EP 0 960 645 A2) bekannten Kapazitätslagen. Das spezifische Volumen ist im Umkehrschluss deutlich erhöht. Das Raumgewicht der erfindungsgemäßen Kapazitätslagen ist um ca. den Faktor 4 geringer als beim der Kapazitätslage gemäß Vergleichsbeispiel. Die erfindungsgemäßen Kapazitätslagen fallen somit deutlich voluminöser aus, was sich insbesondere spezifischen Volumen dieser Materialien wiederspiegelt.

Zum Vergleich der Performance des erfindungsgemäßen Staubsaugerfilterbeutels, verglichen mit einem Staubsaugerfilterbeutel aus dem Stand der Technik wurde der oben beschriebene erfindungsgemäße Staubsaugerfilterbeutel (der eine Kapazitätslage gemäß erfindungsgemäßem Beispiel 6 enthält), dem oben beschriebenen Vergleichsstaubsaugerfilterbeutel (mit einer Kapazitätslage gemäß EP 0 960 645 A2) gegenübergestellt und verglichen. Es wurde der Volumenstrom gemäß DIN EN ISO 60312:2014 in Abhängigkeit der aufgenommenen Menge eines Teststaubes (DMT-Teststaub, Typ 8 gemessen). Das verwendete Gerät war ein Miele C3 Ecoline der eine Leistungsaufnahme von 750 W hatte. Nachdem der Motor warmgelaufen war, wurde ein leerer Staubsaugerfilterbeutel gemäß Beispiel 6 bzw. Vergleichsbeispiel 8 in den Staubsauger eingesetzt. Es erfolgte eine erste Messung des Volumenstroms mit dem leeren Staubsaugerfilterbeutel (0 g Messung). Die Messung wurde nach Aufsaugen von jeweils weiteren 50 g DMT-Teststaub, Typ 8 Staub wiederholt.

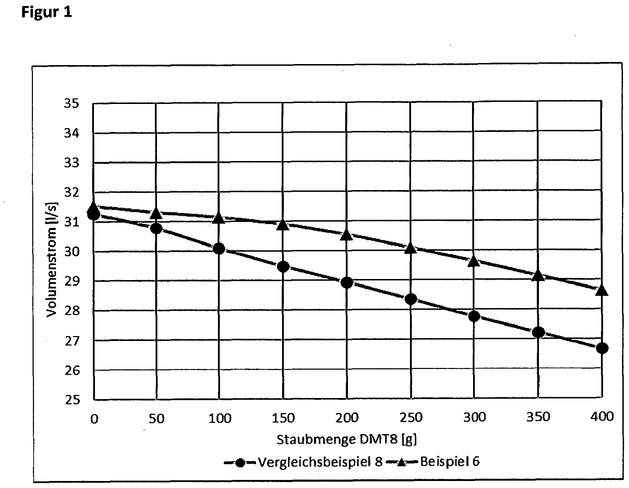

Fig. 1 zeigt das Ergebnis der entsprechenden Staubbeladungstests mit DMT-Staub (Typ 8) gemäß DIN EN 60312-1:2014-01. Völlig überraschend führt die erfindungsgemäße Kapazitätslage zu einem signifikant geringeren Abfall des Volumenstroms. Selbst eine Beladung mit 400 g Staub bei dem erfindungsgemäßen Beutel führt zu einer Abnahme des Volumenstroms von lediglich 9,1 %, wohingegen der herkömmliche Beutel eine Abnahme von 14,7 % zeigt.

Überraschenderweise führt somit das erhöhte spezifische Volumen bzw. das erniedrigte Raumgewicht der in den erfindungsgemäßen Staubsaugerfilterbeuteln enthaltenen Kapazitätslage zu einer deutlichen Verbesserung der Standzeit.

Die erfindungsgemäßen Staubsaugerfilterbeutel weisen daher eine deutlich erhöhte Staubspeicherkapazität und somit eine verlängerte Standzeit auf.

**Patentansprüche**

1. Staubsaugerfilterbeutel, umfassend einen Innenraum umschließende Wandung aus einem luftdurchlässigen Material sowie eine in die Wandung eingebrachte Einlassöffnung,
   **dadurch gekennzeichnet, dass**
   das luftdurchlässige Material mindestens eine Lage eines Vliesstoffes umfasst, der faser- und/oder staubförmiges recyclietes textiles Material und/oder Baumwolllinters umfasst, wobei das spezifische Volumen der Lage des Vliesstoffes 20 bis 500 cm$^3$/g beträgt.

2. Staubsaugerfilterbeutel nach Anspruch 1, **dadurch gekennzeichnet, dass** das spezifische Volumen der mindestens einen Lage des Vliesstoffes 25 bis 250 cm$^3$/g, bevorzugt 30 bis 100 cm$^3$/g, insbesondere 40 bis 60 cm$^3$/g beträgt.

3. Staubsaugerfilterbeutel nach einem der vorhergehenden Ansprüche, **dadurch gekennzeichnet, dass** das faser- und/oder staubförmige recyclierte textile Material aus
   Fasern aus textilen Produktionsabfälle und/oder gebrauchten Textilien, bevorzugt Reißfasern, insbesondere Reißfasern aus Baumwolltextilien und/oder
   faser- und/oder staubförmige Rohstoffe aus Herstellung und/oder Verarbeitung von Textilien und/oder Baumwolllinters
   gewonnen wird.

4. Staubsaugerfilterbeutel nach einem der vorhergehenden Ansprüche, **dadurch gekennzeichnet, dass** die mindestens eine faser- und/oder staubförmiges recycliertes textiles Material und/oder Baumwolllinters umfassende Lage des Vliesstoffes bis zu 95 Gew.-%, bevorzugt 50 bis 90 Gew.-% des faser- und/oder staubförmigen recyclierten textilen Materials und/oder Baumwolllinters und mindestens 5 Gew.-%, bevorzugt 10 bis 50 Gew.-% an Bindefasern, insbesondere Bikomponentenfasern umfasst oder hieraus besteht, wobei insbesondere die Bindefasern Stapelfasern mit einer Länge von 2 bis 75 mm, bevorzugt 2 bis 25 mm aufweisen; wobei bevorzugt die Bikomponentenfasern aus einem Kern, bestehend aus einem ersten thermoplastischen Material und einem Mantel, bestehend aus einem verglichen mit dem ersten thermoplastischen Material bei geringeren Temperaturen schmelzenden zweiten thermoplastischen Material, bestehen, wobei bevorzugt der Kern oder sowohl Kern als auch Mantel aus einem recyclierten Kunststoff oder mehreren recyclierten Kunststoffen besteht.

5. Staubsaugerfilterbeutel nach einem der vorhergehenden Ansprüche, **dadurch gekennzeichnet, dass** das luftdurchlässige Material mehrlagig aufgebaut ist, wobei das luftdurchlässige Material zusätzlich zur mindestens einen Lage des Vliesstoffes, der faser- und/oder staubförmiges recycliertes Material und/oder Baumwolllinters umfasst, mindestens eine weitere Lage aufweist, die einen Vliesstoff und/oder ein Faservlies umfasst oder hieraus gebildet ist, wobei mindestens eine, mehrere oder sämtliche der zusätzlichen Lagen einen oder mehrere recyclierte Kunststoffe umfassen oder hieraus gebildet sind.

6. Staubsaugerfilterbeutel nach einem der vorhergehenden Ansprüche, **dadurch gekennzeichnet, dass** das luftdurchlässige Material
   mindestens eine Stützlage und mindestens eine Kapazitätslage, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen, oder
   mindestens eine Stützlage, mindestens eine Feinfilterlage und mindestens eine Kapazitätslage wobei mindestens eine oder sämtliche der Stützlagen und/oder mindestens eine oder sämtliche der Feinfilterlagen Vliesstoffe, die aus einem recyclierten Kunststoff oder mehreren recyclierten Kunststoffen gebildet sind und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen,
   umfasst, wobei mindestens eine, bevorzugt sämtliche der Kapazitätslagen den Vliesstoff, der faser- und/oder staubförmiges recycliertes textile Material und/oder Baumwolllinters umfasst, umfassen oder hieraus gebildet sind, wobei insbesondere

a) jede Stützlage ein Spinnvlies oder Scrim ist, vorzugsweise mit einer flächenbezogenen Masse von 5 bis 80 $g/m^2$, weiter bevorzugt von 10 bis 50 $g/m^2$, weiter bevorzugt von 15 bis 30 $g/m^2$ und/oder vorzugsweise mit einem Titer der das Spinnvlies bzw. das Scrim bildenden Fasern im Bereich von 0,5 dtex bis 15 dtex,
b) das luftdurchlässige Material 1 bis 3 Stützlagen umfasst,
c) im Falle des Vorhandenseins mindestens zweier Stützlagen die Summe der flächenbezogenen Massen der Summe aller Stützlagen 10 bis 240 $g/m^2$, bevorzugt 15 bis 150 $g/m^2$, weiter bevorzugt 20 bis 100 $g/m^2$, weiter bevorzugt 30 bis 90 $g/m^2$, insbesondere 40 bis 70 $g/m^2$ beträgt, und/oder
d) sämtliche Stützlagen aus einem recyclierten Kunststoff oder mehreren recyclierten Kunststoffen, insbesondere aus rPET gebildet sind.

7. Staubsaugerfilterbeutel nach einem der beiden vorhergehenden Ansprüche, **dadurch gekennzeichnet, dass**

a) jede Feinfilterlage ein Extrusionsvliesstoff, insbesondere ein Meltblown-Vliesstoff ist, vorzugsweise mit einer flächenbezogenen Masse von 5 bis 100 $g/m^2$, bevorzugt 10 bis 50 $g/m^2$, insbesondere 10 bis 30 $g/m^2$,
b) das luftdurchlässige Material 1 bis 5 Feinfilterlagen umfasst,
c) im Falle des Vorhandenseins mindestens zweier Feinfilterlagen die Summe der flächenbezogenen Massen der Summe aller Feinfilterlagen 10 bis 300 $g/m^2$, bevorzugt 15 bis 150 $g/m^2$, insbesondere 20 bis 50 $g/m^2$ beträgt,
d) mindestens eine, bevorzugt sämtliche Feinfilterlagen aus einem recyclierten Kunststoff oder mehreren recyclierten Kunststoffen, insbesondere aus rPET gebildet sind und/oder
e) mindestens eine, bevorzugt sämtliche Feinfilterlagen elektrostatisch aufgeladen sind.

8. Staubsaugerfilterbeutel nach einem der Ansprüche 5 bis 7, **dadurch gekennzeichnet, dass**

a) mindestens eine, bevorzugt jede Kapazitätslage ein Vliesstoff ist, der faser- und/oder staubförmiges recycliertes textiles Material umfasst, wobei jede Kapazitätslage vorzugsweise eine flächenbezogene Masse von 5 bis 200 $g/m^2$, weiter bevorzugt von 10 bis 150 $g/m^2$, weiter bevorzugt von 20 bis 100 $g/m^2$, insbesondere 30 bis 50 $g/m^2$ aufweist,
b) das luftdurchlässige Material 1 bis 5 Kapazitätslagen umfasst, und/oder
c) im Falle des Vorhandenseins mindestens zweier Kapazitätslagen die Summe der flächenbezogenen Massen der Summe aller Kapazitätslagen 10 bis 300 $g/m^2$, bevorzugt 15 bis 200 $g/m^2$, weiter bevorzugt 20 bis 100 $g/m^2$, insbesondere 50 bis 90 $g/m^2$ beträgt.

9. Staubsaugerfilterbeutel nach einem der Ansprüche 5 bis 8, **dadurch gekennzeichnet, dass** das luftdurchlässige Material mehrlagig ausgebildet ist mit einer vom Innenraum des Staubsaugerfilterbeutels aus gesehenen Lagenfolge: eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage.

10. Staubsaugerfilterbeutel nach einem der vorhergehenden Ansprüche, **dadurch gekennzeichnet, dass** der Staubsaugerfilterbeutel eine die Einlassöffnung einfassende Halteplatte aufweist, die aus einem oder mehreren recycelten Kunststoffen gebildet ist oder einen oder mehrere recycelte Kunststoffe umfasst.

11. Staubsaugerfilterbeutel nach einem der vorhergehenden Ansprüche, **dadurch gekennzeichnet, dass** im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen oder aus einem Vliesstoffes, der faser- und/oder staubförmiges recycliertes textiles Material und/oder Baumwolllinters umfasst, gebildet ist.

12. Staubsaugerfilterbeutel nach einem der vorhergehenden Ansprüche, **dadurch gekennzeichnet, dass** der recyclierte Kunststoff ausgewählt ist aus der Gruppe bestehend aus recyclierten Polyestern, insbesondere recycliertem Polyethylenterephthalat (rPET), recycliertem Polybutylenterephthalat (rPBT), recyclierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

13. Staubsaugerfilterbeutel nach einem der vorhergehenden Ansprüche, **dadurch gekennzeichnet, dass** der Gewichtsanteil aller recyclierten Materialien und/oder der Baumwollinters, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt.

**14.** Staubsaugerfilterbeutel nach einem der vorhergehenden Ansprüche, in Form eines Flachbeutels, eines Blockbodenbeutels oder eines 3D-Beutels.

**15.** Verwendung von Vliesstoffen, die faser- und/oder staubförmiges recycliertes textiles Material und/oder Baumwolllinters umfassen mit einem spezifischen Volumen von 20 bis 500 cm$^3$/g für die den Innenraum umschließende Wandung eines Staubsaugerfilterbeutels.

## Claims

**1.** A vacuum cleaner filter bag comprising an interior-enclosing wall of an air-permeable material as well as an inlet opening made in the wall, **characterised in that** the air-permeable material comprises at least one layer of a non-woven fabric which comprises fibrous and/or dust-like, recycled, textile material and/or cotton linters, wherein the specific volume of the layer of the non-woven fabric is 20 to 500 cm$^3$/g.

**2.** A vacuum cleaner filter bag according to claim 1, **characterised in that** the specific volume of the at least one layer of the non-woven fabric is 25 to 250 cm$^3$/g, preferably 30 to 100 cm$^3$/g, in particular 40 to 60 cm$^3$/g.

**3.** A vacuum cleaner filter bag according to any one of the preceding claims, **characterised in that** the fibrous and/or dust-like, recycled, textile material is obtained from fibres from textile production waste and/or used textiles, preferably tear fibres, in particular tear fibres from cotton textiles,
and/or
fibrous and/or dust-like raw materials from the manufacture and/or processing of textiles and/or cotton linters.

**4.** A vacuum cleaner filter bag according to any one of the preceding claims, **characterised in that** the at least one non-woven fabric layer comprising fibrous and/or dust-like, recycled, textile material and/or cotton linters comprises or consists of up to 95 percent by weight, preferably 50 to 90 percent by weight of the fibrous and/or dust-like, recycled, textile material and/or cotton linters and at least 5 percent by weight, preferably 10 to 50 percent by weight of binding fibres, in particular bi-component fibres, wherein in particular the binding fibres have staple fibres with a length from 2 to 75 mm, preferably 2 to 25 mm; wherein preferably the bi-component fibres consist of a core, consisting of a first thermoplastic material, and a sheath, consisting of a second thermoplastic material melting at lower temperatures compared with the first thermoplastic material, wherein preferably the core or both core and sheath consist(s) of a recycled plastics material or a plurality of recycled plastics materials.

**5.** A vacuum cleaner filter bag according to any one of the preceding claims, **characterised in that** the air-permeable material is multi-layered in construction, wherein in addition to the at least one non-woven fabric layer comprising fibrous and/or dust-like, recycled material and/or cotton linters, the air-permeable material has at least one further layer which comprises or is formed from a non-woven fabric and/or a non-woven fibre fabric, wherein at least one, a plurality or all of the additional layers comprise or are formed from one or a plurality of recycled plastics materials.

**6.** A vacuum cleaner filter bag according to any one of the preceding claims, **characterised in that** the air-permeable material comprises at least one support layer and at least one capacity layer, wherein at least one or all of the support layers constitute non-woven fabrics and/or at least one or all of the capacity layers constitute non-woven fabrics or non-woven fibre fabrics, which comprise a recycled plastics material or a plurality of recycled plastics materials or are formed therefrom,
or
at least one support layer, at least one fine filter layer and at least one capacity layer, wherein at least one or all of the support layers and/or at least one or all of the fine filter layers constitute non-woven fabrics, which are formed from a recycled plastics material or a plurality of recycled plastics materials, and/or at least one or all of the capacity layers constitute non-woven fabrics or non-woven fibre fabrics, which comprise a recycled plastics material or a plurality of recycled plastics materials or are formed therefrom,
wherein at least one, preferably all of the capacity layers comprise or are formed from the non-woven fabric which comprises fibrous and/or dust-like, recycled, textile material and/or cotton linters, wherein in particular

a) each support layer is a spun-bonded fabric or scrim, preferably with a mass per unit area from 5 to 80 g/m$^2$, more preferably from 10 to 50 g/m$^2$, more preferably from 15 to 30 g/m$^2$ and/or preferably with a titre of the fibres forming the spun-bonded fabric or the scrim in the range from 0.5 dtex to 15 dtex,
b) the air-permeable material comprises 1 to 3 support layers,
c) in the event of the presence of at least two support layers, the sum of the masses per unit area of the sum of all support layers is 10 to 240 g/m$^2$, preferably 15 to 150 g/m$^2$, more preferably 20 to 100 g/m$^2$, more preferably 30 to 90 g/m$^2$, in particular 40 to 70 g/m$^2$, and/or
d) all support layers are formed from a recycled plastics material or a plurality of recycled plastics materials, in particular from rPET.

7. A vacuum cleaner filter bag according to either one of the two preceding claims, **characterised in that**

a) each fine filter layer is an extrusion non-woven fabric, in particular a melt-blown non-woven fabric, preferably with a mass per unit area from 5 to 100 g/m$^2$, preferably 10 to 50 g/m$^2$, in particular 10 to 30 g/m$^2$,
b) the air-permeable material comprises 1 to 5 fine filter layers,
c) in the event of the presence of at least two fine filter layers, the sum of the masses per unit area of the sum of all fine filter layers is 10 to 300 g/m$^2$, preferably 15 to 150 g/m$^2$, in particular 20 to 50 g/m$^2$,
d) at least one, preferably all fine filter layers are formed from a recycled plastics material or a plurality of recycled plastics materials, in particular from rPET and/or
e) at least one, preferably all fine filter layers are electrostatically charged.

8. A vacuum cleaner filter bag according to any one of claims 5 to 7, **characterised in that**

a) at least one, preferably each capacity layer is a non-woven fabric which comprises fibrous and/or dust-like, recycled, textile material, wherein each capacity layer preferably has a mass per unit area from 5 to 200 g/m$^2$, more preferably from 10 to 150 g/m$^2$, more preferably from 20 to 100 g/m$^2$, in particular 30 to 50 g/m$^2$,
b) the air-permeable material comprises 1 to 5 capacity layers, and/or
c) in the event of the presence of at least two capacity layers, the sum of the masses per unit area of the sum of all capacity layers is 10 to 300 g/m$^2$, preferably 15 to 200 g/m$^2$, more preferably 20 to 100 g/m$^2$, in particular 50 to 90 g/m$^2$.

9. A vacuum cleaner filter bag according to any one of claims 5 to 8, **characterised in that** the air-permeable material is multi-layered in construction with, viewed outwards from the interior of the vacuum cleaner filter bag, the layer sequence:
a support layer, at least one, preferably at least two, capacity layers, preferably a further support layer, at least one, preferably at least two, fine filter layers as well as a further support layer.

10. A vacuum cleaner filter bag according to any one of the preceding claims, **characterised in that** the vacuum cleaner filter bag has a holding plate, surrounding the inlet opening, which is formed from one or a plurality of recycled plastics materials or comprises one or a plurality of recycled plastics materials.

11. A vacuum cleaner filter bag according to any one of the preceding claims, **characterised in that** at least one flow distributor and/or at least one diffuser is/are arranged in the interior, wherein preferably the at least one flow distributor and/or the at least one diffuser is/are formed from a recycled plastics material or a plurality of recycled plastics materials or from a non-woven fabric which comprises fibrous and/or dust-like, recycled, textile material and/or cotton linters.

12. A vacuum cleaner filter bag according to any one of the preceding claims, **characterised in that** the recycled plastics material is selected from the group consisting of recycled polyesters, in particular recycled polyethylene terephthalate (rPET), recycled polybutylene terephthalate (rPBT), recycled polylactic acid (rPLA), recycled polyglycolide and/or recycled polycaprolactone; recycled polyolefins, in particular recycled polypropylene (rPP), recycled polyethylene and/or recycled polystyrene (rPS); recycled polyvinyl chloride (rPVC), recycled polyamides as well as mixtures and combinations thereof.

13. A vacuum cleaner filter bag according to any one of the preceding claims, **characterised in that** the proportion by weight of all recycled materials and/or of the cotton linters is at least 25%, preferably at least 30%, more preferably at least 40%, more preferably at least 50%, more preferably at least 60%, more preferably at least 70%, more preferably at least 80%, more preferably at least 90%, in particular at least 95%, related to the total weight of the vacuum cleaner filter bag.

14. A vacuum cleaner filter bag according to any one of the preceding claims, in the form of a flat bag, a block bottom bag or a 3D bag.

15. Use of non-woven materials, comprising fibrous and/or dust-like, recycled, textile material and/or cotton linters, with a specific volume from 20 to 500 cm$^3$/g for the interior-enclosing wall of a vacuum cleaner filter bag.

**Revendications**

1. Sac filtrant pour aspirateur, comprenant une paroi entourant un espace intérieur, constituée d'un matériau perméable à l'air, ainsi qu'une ouverture d'entrée, aménagée dans la paroi, **caractérisé en ce que** le matériau perméable à l'air comprend au moins une couche d'un non-tissé, qui comprend un matériau textile recyclé, sous forme fibreuse et/ou pulvérulente, et/ou des linters de coton, le volume spécifique de la couche du non-tissé étant de 20 à 500 cm$^3$/g.

2. Sac filtrant pour aspirateur selon la revendication 1, **caractérisé en ce que** le volume spécifique de l'au moins une couche du non-tissé est de 25 à 250 cm$^3$/g, de préférence de 30 à 100 cm$^3$/g, en particulier de 40 à 60 cm$^3$/g.

3. Sac filtrant pour aspirateur selon l'une des revendications précédentes, **caractérisé en ce que** le matériau textile recyclé, sous forme fibreuse et/ou pulvérulente, est obtenu à partir de
fibres provenant de déchets de production textiles et/ou de textiles usés, de préférence des fibres de récupération, en particulier des fibres de récupération provenant de textiles à base de coton, et/ou
de matières premières sous forme fibreuse et/ou pulvérulente, provenant de la fabrication et/ou de la transformation de textiles, et/ou
de linters de coton.

4. Sac filtrant pour aspirateur selon l'une des revendications précédentes, **caractérisé en ce que** la couche du non-tissé comportant au moins un matériau textile recyclé, sous forme fibreuse et/ou pulvérulente, et/ou des linters de coton, comprend, ou en est constituée jusqu'à 95 % en poids, de préférence 50 à 90 % en poids du matériau textile recyclé, sous forme fibreuse et/ou pulvérulente, et/ou des linters de coton, et au moins 5 % en poids, de préférence 10 à 50 % en poids, de fibres de liaison, en particulier de fibres bicomposants, en particulier les fibres de liaison comportant des fibres coupées ayant une longueur de 2 à 75 mm, de préférence de 2 à 25 mm ; de préférence les fibres bicomposants étant constituées d'un noyau constitué d'un premier matériau thermoplastique et d'une gaine constituée d'un deuxième matériau thermoplastique, fondant à une température inférieure à la température de fusion du premier matériau thermoplastique, le noyau, ou encore tant le noyau que la gaine, étant de préférence constitué d'un plastique recyclé ou de plusieurs plastiques recyclés.

5. Sac filtrant pour aspirateur selon l'une des revendications précédentes, **caractérisé en ce que** le matériau perméable à l'air a une structure multicouche, le matériau perméable à l'air présentant, en plus de l'au moins une couche de non-tissé, qui comprend un matériau recyclé, sous forme fibreuse et/ou pulvérulente, et/ou des linters de coton, au moins une autre couche, qui comprend, ou en est constituée, un non-tissé et/ou une nappe de fibres, au moins une, plusieurs ou la totalité des couches supplémentaires comprenant, ou en étant constituées, un ou plusieurs plastiques recyclés.

6. Sac filtrant pour aspirateur selon l'une des revendications précédentes, **caractérisé en ce que** le matériau perméable à l'air comprend
au moins une couche support et au moins une couche de capacité, au moins une ou la totalité des couches supports représentant des non-tissés et/ou au moins une ou la totalité des couches de capacité représentant des non-tissés ou des nappes de fibres, qui comprennent, ou en sont constitués, un plastique recyclé ou plusieurs plastiques recyclés, ou
au moins une couche support, au moins une couche de filtration fine et au moins une couche de capacité, au moins une ou la totalité des couches supports et/ou au moins une ou la totalité des couches de filtration fine représentant des non-tissés, qui sont formés d'un plastique recyclé ou de plusieurs plastiques recyclés, et au moins une ou la totalité des couches de capacité représentant des non-tissés ou des nappes de fibres, qui comprennent, ou en sont constituées, un plastique recyclé ou plusieurs plastiques recyclés,
au moins une, de préférence la totalité des couches de capacité comprenant, ou en étant constituées, le non-tissé qui comprend un matériau recyclé, sous forme fibreuse et/ou pulvérulente, et/ou des linters de coton, auquel cas en particulier

a) chaque couche support est un filé-lié ou un canevas, ayant de préférence un grammage de 5 à 80 g/m$^2$, plus préférentiellement de 10 à 50 g/m$^2$, mieux de 15 à 30 g/m$^2$ et/ou de préférence présentant un titre des fibres formant le filé-lié ou le canevas compris dans la plage de 0,5 dtex à 15 dtex,
b) le matériau perméable à l'air comprend 1 à 3 couches supports,
c) en présence d'au moins deux couches supports, le grammage de la somme de toutes les couches supports est de 10 à 240 g/m$^2$, de préférence de 15 à 150 g/m$^2$, plus préférentiellement de 20 à 100 g/m$^2$, plus préférentiellement de 30 à 90 g/m$^2$, en particulier de 40 à 70 g/m$^2$, et/ou
d) la totalité des couches supports sont formées d'un plastique recyclé ou de plusieurs plastiques recyclés, en particulier de rPET.

7. Sac filtrant pour aspirateur selon l'une des deux revendications précédentes, **caractérisé en ce que**

a) chaque couche de filtration fine est un non-tissé obtenu par extrusion, en particulier un non-tissé obtenu par fusion-soufflage, présentant de préférence un grammage de 5 à 100 g/m$^2$, de préférence de 10 à 50 g/m$^2$, en particulier de 10 à 30 g/m$^2$,
b) le matériau perméable à l'air comprend 1 à 5 couches de filtration fine,
c) en présence d'au moins deux couches de filtration fine, le grammage total de la somme de toutes les couches de filtration fine est de 10 à 300 g/m$^2$, de préférence de 15 à 150 g/m$^2$, en particulier de 20 à 50 g/m$^2$,
d) au moins une, de préférence la totalité des couches de filtration fine sont formées d'un plastique recyclé ou de plusieurs plastiques recyclés, en particulier de rPET et/ou
e) au moins une, de préférence la totalité des couches de filtration fine, sont électrostatiquement chargées.

8. Sac filtrant pour aspirateur selon l'une des revendications 5 à 7, **caractérisé en ce que**

a) au moins une, de préférence chaque couche de capacité, est un non-tissé, qui comprend un matériau textile recyclé, sous forme fibreuse et/ou pulvérulente, chaque couche de capacité présentant de préférence un grammage de 5 à 200 g/m$^2$, plus préférentiellement de 10 à 150 g/m$^2$, plus préférentiellement de 20 à 100 g/m$^2$, en particulier de 30 à 50 g/m$^2$,
b) le matériau perméable à l'air comprend 1 à 5 couches de capacité, et/ou
c) en présence d'au moins deux couches de capacité, le grammage total de la somme de toutes les couches de capacité est de 10 à 300 g/m$^2$, de préférence de 15 à 200 g/m$^2$, plus préférentiellement de 20 à 100 g/m$^2$, en particulier de 50 à 90 g/m$^2$.

9. Sac filtrant pour aspirateur selon l'une des revendications 5 à 8, **caractérisé en ce que** le matériau perméable à l'air a une structure multicouche comprenant la séquence de couches suivante, dans l'ordre à partir de l'espace intérieur du sac filtrant pour aspirateur :
une couche support, au moins une, de préférence au moins deux couches de capacité, de préférence une couche support supplémentaire, au moins une, de préférence au moins deux couches de filtration fine, ainsi qu'une couche support supplémentaire.

10. Sac filtrant pour aspirateur selon l'une des revendications précédentes, **caractérisé en ce que** le sac filtrant pour aspirateur présente une plaque de maintien encadrant l'ouverture d'entrée, qui est formée d'un ou plusieurs plastiques recyclés, ou comprend un ou plusieurs plastiques recyclés.

11. Sac filtrant pour aspirateur selon l'une des revendications précédentes, **caractérisé en ce qu'**au moins un répartiteur de flux et/ou au moins un diffuseur sont disposés dans l'espace intérieur, de préférence l'au moins un répartiteur de flux et/ou l'au moins un diffuseur étant formés d'un plastique recyclé ou de plusieurs plastiques recyclés, ou d'un non-tissé, qui comprend un matériau recyclé sous forme fibreuse et/ou pulvérulente, et/ou des linters de coton.

12. Sac filtrant pour aspirateur selon l'une des revendications précédentes, **caractérisé en ce que** le plastique recyclé est choisi dans le groupe consistant en les polyesters recyclés, en particulier le poly(téréphtalate d'éthylène) (rPET), le poly(téréphtalate de butylène) recyclé (rPBT), le poly(acide lactique) recyclé (rPLA), le polyglycolide recyclé et/ou la polycaprolactone recyclée ; les polyoléfines recyclées, en particulier le polypropylène recyclé (rPP), le polyéthylène recyclé et/ou le polystyrène recyclé (rPS) ; le poly(chlorure de vinyle) recyclé (rPVC), les polyamides recyclés, ainsi que les mélanges et combinaisons de ceux-ci.

13. Sac filtrant pour aspirateur selon l'une des revendications précédentes, **caractérisé en ce que** le proportion pondérale de la totalité des matériaux recyclés et/ou des linters de coton, par rapport au poids total du sac filtrant pour aspirateur, est d'au moins 25 %, de préférence d'au moins 30 %, plus préférentiellement d'au moins 40 %, plus préférentiellement d'au moins 50 %, plus préférentiellement d'au moins 60 %, plus préférentiellement d'au moins 70 %, plus préférentiellement d'au moins 80 %, plus préférentiellement d'au moins 90 %, en particulier d'au moins 95 %.

14. Sac filtrant pour aspirateur selon l'une des revendications précédentes, sous forme d'un sac à fond plat, d'un sac à soufflet ou d'un sac 3D.

15. Utilisation de non-tissés, qui comprennent un matériau textile recyclé, de forme fibreuse et/ou pulvérulente, et/ou de linters de coton, présentant un volume spécifique de 20 à 500 cm$^3$/g, pour la paroi entourant l'espace intérieur d'un sac filtrant pour aspirateur.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2301404 A
- WO 2011047764 A
- EP 1198280 A
- EP 2433695 A
- EP 1254693 A
- DE 19919809
- EP 1795247 A
- EP 0960645 A
- WO 2013106392 A
- CN 101747596

- EP 0960645 A2
- US 2009223190 A1
- WO 2011057641 A1
- EP 1795427 A1
- WO 01003802 A
- EP 2263508 A
- EP 2442703 A
- DE 202006020047
- DE 202008003248
- DE 202008005050

**In der Beschreibung aufgeführte Nicht-Patentliteratur**

- Handbook of Nonwovens. Woodhead Publishing Ltd,

- Vliesstoffe. Wiley-VCH, 2012